# EUROPÄISCHE PATENTANMELDUNG

(11) **EP 1 634 794 A2**
(43) Veröffentlichungstag der Anmeldung: **15.03.2006**
(21) Anmeldenummer: 05012822.2
(22) Anmeldetag: 15.06.2005
(51) Int. Cl.: B62B 13/16

(54) **Schlitten**

(30) Priorität: 09.09.2004 DE 102004043582
(71) Anmelder: Firma Franz Schneider GmbH & Co. KG, D-96465 Neustadt b. Coburg (DE)
(72) Erfinder: Ewringmann, Ulrich, 82024 Taufkirchen (DE)
(74) Vertreter: Flosdorff, Jürgen

(57) **Zusammenfassung**

Der Schlitten ist aus zwei Schlittenhälften zusammengesetzt, die über Scharniereinrichtungen derart gelenkig miteinander verbunden sind, daß der Schlitten um seine Längsmittelachse zusammenklappbar ist. Im aufgeklappten Zustand liegt jeweils ein oberer Abschnitt eines scherenförmigen Steges mit seiner Unterseite auf der Oberseite des zugeordneten anderen scherenförmigen Steges auf. Durch diese flächige Auflage der scherenförmigen Stege aufeinander ist der Schlitten sehr stabil. Der aufgeklappte Gebrauchszustand des Schlittens wird durch den lösbaren Verriegelungsmechanismus automatisch gesichert.

## Beschreibung

Die Erfindung betrifft einen Schlitten gemäß dem Oberbegriff des Patentanspruchs 1.

Ein herkömmlicher Schlitten hat in Folge seiner querschnittlichen Rechteckform einen beträchtlichen Platzbedarf, so daß er beispielsweise in vielen Fällen in dem Kofferraum eines Kraftfahrzeugs zusammen mit anderen Gepäckstücken nicht unterbringbar ist und häufig auf einem Gepäckträger befestigt werden muß. Wenn ein solcher Schlitten in bestimmten Situationen getragen werden muß, kann dies vor allem kleineren Kindern erhebliche Schwierigkeiten bereiten.

Der vorliegenden Erfindung liegt die Aufgabe zugrunde, einen Schlitten anzugeben, dessen Platzbedarf beträchtlich verringerbar ist und der leichter tragbar ist. Außerdem soll sichergestellt sein, daß der Schlitten im aufgeklappten Gebrauchszustand die erforderliche Stabilität hat, um den einwirkenden Kräften Stand zu halten und den aufgeklappten Zustand sicher beizubehalten.

Diese Aufgabe wird erfindungsgemäß durch die Merkmale des Patentanspruchs 1 gelöst.

Die Erfindung sieht vor, daß der Schlitten aus zwei Schlittenhälften zusammengesetzt ist, die über Scharniereinrichtungen derart gelenkig miteinander verbunden sind, daß der Schlitten um seine Längsmittelachse zusammenklappbar ist.

Dabei ist mit Vorzug vorgesehen, daß die Schlittenhälften jeweils einen Kufenabschnitt enthalten, der in einen vorderen Quersteg übergeht, der an seinem freien Ende mit einem ösenförmigen bzw. scharnierartigen Gelenkabschnitt versehen ist, und zwei weitere an dem Kufenabschnitt angesetzte scherenförmig ausgebildete Querstege, die an ihren Enden jeweils durch einen in Längsrichtung verlaufenden Sitzsteg verbunden sind, an dem ein flexibles Sitzelement befestigt ist, und daß die scherenförmigen Stege jeweils an einer Zwischenposition mit ösenförmigen bzw. scharnierartigen Gelenkabschnitten versehen sind. Das Sitzelement ist bevorzugt ein Tuch, das im aufgeklappten Gebrauchszustand des Schlittens zwischen den beiden Sitzstegen gespannt ist.

Weiter ist vorgesehen, daß alle scharnierartigen Gelenkabschnitte miteinander fluchten und daß ein querschnittlich bevorzugt kreisrunder Verbindungsstab durch die Gelenkabschnitte verläuft. Dieser Verbindungsstab, der bevorzugt eine Rohrform hat, steht zweckmäßigerweise ein wenig über die vorderen und hinteren Ösenabschnitte vor und kann beispielsweise mit einer Befestigungskappe größeren Durchmessers versehen sein, wobei diese Kappen fest an den beiden Enden des Verbindungsstabes angebracht sind. Es können auch andere Mittel vorgesehen sein, die den Verbindungsstab sicher in seiner Einbaulage fixieren.

Anstatt eines einzigen durchgehenden Verbindungsstabs oder Verbindungsrohres können auch an jedem Gelenkabschnitt zugehörige kurze Scharnierstifte vorgesehen sein.

Mit besonderem Vorteil ist vorgesehen, daß jeweils ein oberer Abschnitt der beiden scherenförmigen Stege mit seiner Unterseite im aufgeklappten Zustand des Schlittens auf der Oberseite des unteren Abschnitts des jeweils zugeordneten anderen scherenförmigen Steges aufliegt, wobei in diesem Zustand - wie oben erwähnt - das Sitztuch gespannt ist. Durch diese flächige Auflage der scherenförmigen Stege auf einander ist der Schlitten sehr stabil.

Mit großem Vorteil wird ferner vorgeschlagen, daß der Schlitten im aufgeklappten Gebrauchszustand durch einen lösbaren Verriegelungsmechanismus gesichert ist. Dabei ist bevorzugt, daß der Verriegelungsmechanismus eine in axialer Richtung verschiebliche Verriegelungshülse enthält, die die scharnierartigen Gelenkabschnitte wenigstens eines Paares der scherenförmigen Stege im aufgeklappten Zustand des Schlittens verriegelt. Zweckmäßigerweise sind beide Scharnierbereiche der scherenförmigen Querstäbe mit einem derartigen Verriegelungsmechanismus versehen.

Die Verriegelungshülse kann dabei wenigstens einen nach außen weisenden Vorsprung aufweisen, der in einem seitlich den Vorsprung mit geringem Spiel umfassenden Aufnahmeraum eines der scharnierartigen Gelenkabschnitte sitzt, wobei dieser Aufnahmeraum zu dem angrenzenden anderen scharnierartigen Gelenkabschnitt hin offen ist, und daß der andere scharnierartige Gelenkabschnitt eine umlaufende stirnseitige Begrenzungswand mit einer Aussparung aufweist, durch die ein axialer Abschnitt des Vorsprungs in einen entsprechenden Aufnahmeraum eintreten kann. Bevorzugt hat die Verriegelungshülse zwei derartige, diametral gegenüberliegende Vorsprünge, die radial nach außen von der Verriegelungshülse abstehen.

Weiter ist vorgesehen, daß die Verriegelungshülse durch eine Federeinrichtung, bevorzugt eine die Verriegelungshülse umgebende Schraubenfeder, in die Verriegelungsrichtung vorgespannt ist.

Die Verriegelungshülse ist fest mit dem Verbindungsstab verbunden, so daß sie durch Verschieben des Verbindungsstabes entgegen der Verriegelungsrichtung wieder in die Freigabestellung verschiebbar ist, in der die Verriegelungshülse aus dem einen scharnierartigen Gelenkabschnitt wieder austritt.

Die Stege der beiden Schlittenhälften haben zweckmäßigerweise querschnittlich eine langgestreckte Rechteckform. Die beiden Schlittenhälften bestehen bevorzugt aus Kunststoff und sind einstückig hergestellt, so daß der aus wenigen Teilen zusammengesetzte Schlitten mit verhältnismäßig geringen Kosten herstellbar ist.

Weitere Einzelheiten der Erfindung ergeben sich aus der nachfolgenden Beschreibung zweier bevorzugter Ausführungsformen sowie anhand der Zeichnungen. Dabei zeigen:
- Figuren 1A bis 1D: eine erste Ausführungsform des Schlittens in einer perspektivischen Ansicht, einer Draufsicht, einer vorderen Stirnansicht und einer Seitenansicht;
- Figuren 2A bis 2D: den Schlitten der Figur 1 in entsprechenden Darstellungen im zusammengeklappten Zustand;
- Figuren 3A und 3B: eine zweite Ausführungsform des Schlittens in perspektivischen Ansichten schräg von hinten und schräg von vorne;
- Figuren 4A und 4B: den Schlitten der Figur 3 im zusammengeklappten Zustand in zwei perspektivischen Ansichten;
- Figur 5: eine teilweise geschnittene Darstellung der Scharniere der scherenförmigen Querstege, im entriegelten Zustand der Kufen;
- Figur 6: den verriegelten Zustand der Kufen im aufgeklappten Gebrauchszustand des Schlittens und
- Figur 7: eine perspektivische Darstellung der Verriegelungshülse der Scharniere.

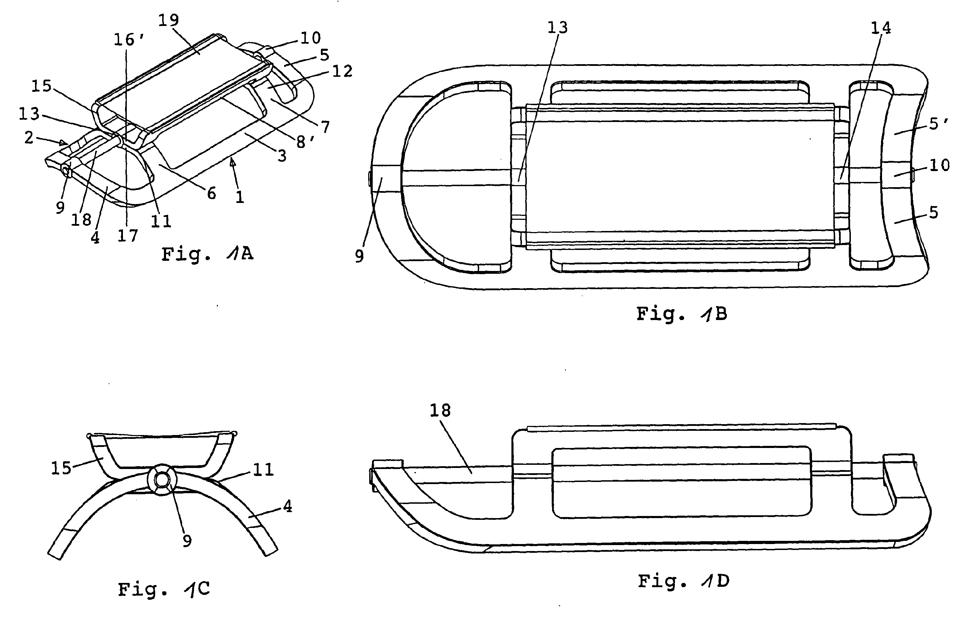

Die Figuren 1 A bis 1 D zeigen den erfindungsgemäßen Schlitten im aufgeklappten Gebrauchszustand. Der Schlitten enthält zwei Schlittenhälften 1, 2 die spiegelverkehrt zueinander ausgebildet sind. Jede Schlittenhälfte 1,2 besteht aus einem einstückigen Kunststoffteil, das einen Kufenabschnitt 3 aufweist, der an seinem vorderen und hinteren Ende in einen vorderen Quersteg 4 und einen hinteren Quersteg 5 übergeht, und an dem im Abstand von den Querstegen 4 und 5 ebenfalls voneinander beabstandete scherenförmige Stege 6, 7 angesetzt sind, die an ihren freien Enden durch einen in Längsrichtung des Schlittens verlaufenden Sitzsteg 8 verbunden sind.

Die Querstege 4, 5 der beiden Schlittenhälften 1, 2 sind an ihren freien Enden jeweils mit einer oder mehreren Ösen bzw. Scharnieren 9, 10 versehen. Beispielsweise können die Querstege 4 und 5 der einen Schlittenhälfte 1 mit jeweils einer Öse 9 und 10 versehen sein, während die Querstege 4' und 5' der anderen Schlittenhälfte 2 ebenfalls mit je einer Öse versehen sind, die derart axial versetzt ist, daß die beiden Ösen je eines ösenförmigen Gelenkabschnitts aneinander anliegen. Natürlich kann jeder Quersteg 4, 4' und 5, 5' der beiden Schlittenhälften 1 und 2 auch mit mehreren versetzt zueinander angeordneten Ösen 9 und 10 versehen sein, die wechselseitig hintereinander angeordnet sind.

Die etwa S-förmigen, scherenförmigen Stege 6 und 7 bestehen jeweils aus einem unteren Abschnitt 10 bzw. 11, die in den Ösen 9 und 10 entsprechenden Ösen 13 und 14 enden, sowie jeweils einem oberen, an der anderen Schlittenseite befindlichen Abschnitt 15 und 16.

Dabei sind die scherenförmigen Stege 11 und 12 der beiden Schlittenhälften 1 und 2 so geformt, daß ein Bereich 16 des oberen Abschnitts der scherenförmigen Stege 6 und 7 flächig auf einem Bereich 17 des unteren Abschnitts 11 der scherenförmigen Stege 6 und 7 aufliegt, wenn sich der Schlitten in der aufgeklappten Gebrauchsstellung befindet. Das heißt, zu beiden Seiten der ösenförmigen Gelenkabschnitte 13 und 14 liegen die scherenförmigen Stege der beiden Schlittenhälften 1 und 2 vorzugsweise mit ebenen Flächen oder mit übereinstimmend gekrümmten Flächen glatt aneinander an, wodurch der Schlitten sehr stabil ist.

Durch die Ösen 9, 13, 14 und 10 verläuft ein im Querschnitt kreisförmiger Verbindungsstab bzw. ein Verbindungsrohr 18, der bzw. das ein wenig über die äußeren Ösen 9 und 10 vorstehen kann und dort beispielsweise durch eine Kappe größeren Durchmessers gesichert sein kann.

Zwischen den Sitzstegen 8 ist ein Sitzelement 19 in Form eines Tuches gespannt, wenn der Schlitten aufgeklappt ist.

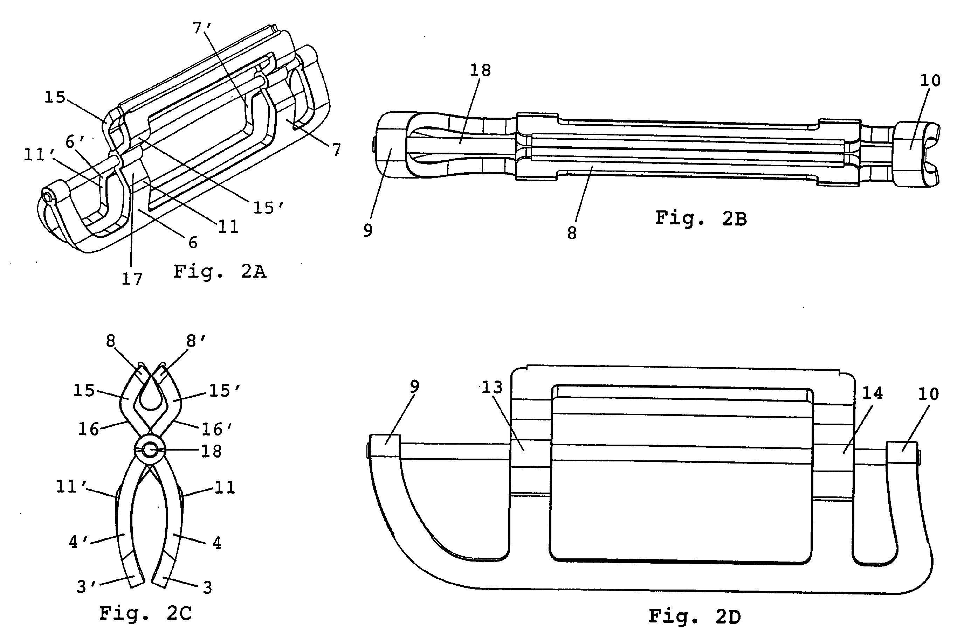

In den Figuren 2A und 2C sind die beiden rechten scherenförmigen Stege mit 6 und 7 bezeichnet, während die zugehörigen Stege der anderen Schlittenhälfte mit 6' und 7' bezeichnet sind. Entsprechend sind die unteren und oberen Abschnitte mit 11, 15 und 11' und 15' bezeichnet.

Die Figuren 2A bis 2D, die den Schlitten im zusammengeklappten Zustand zeigen, lassen erkennen, daß der Platzbedarf des zusammengeklappten Schlittens sehr viel kleiner ist, da seine Breite bei im wesentlichen aneinander anliegenden Kufenabschnitten 3 und 3' sowie aneinander anliegenden Sitzstegen 8 und 8' minimal ist.

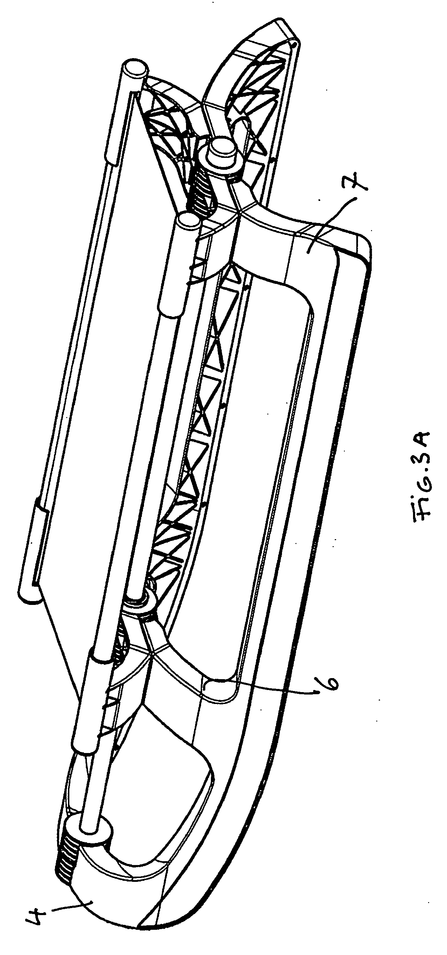

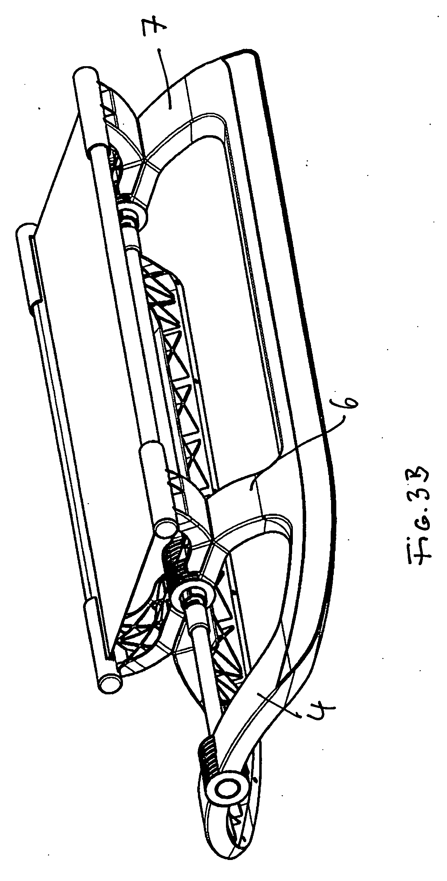

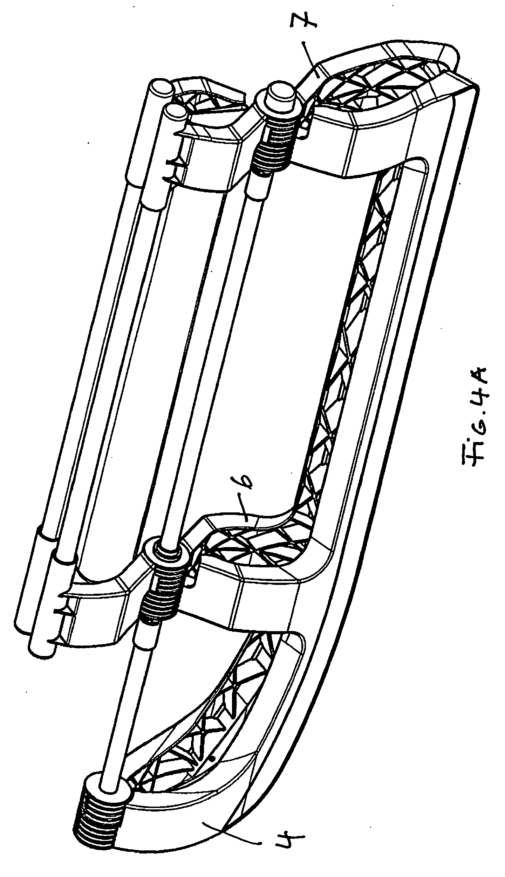

Die Figuren 3 und 4 zeigen eine andere Ausführungsform des Schlittens, bei der die hinteren Querstege 5 und 5' der ersten Ausführungsform weggelassen sind. Dieser Schlitten enthält demnach nur die vorderen Querstege 4 sowie die scherenförmigen Stege 6 und 7.

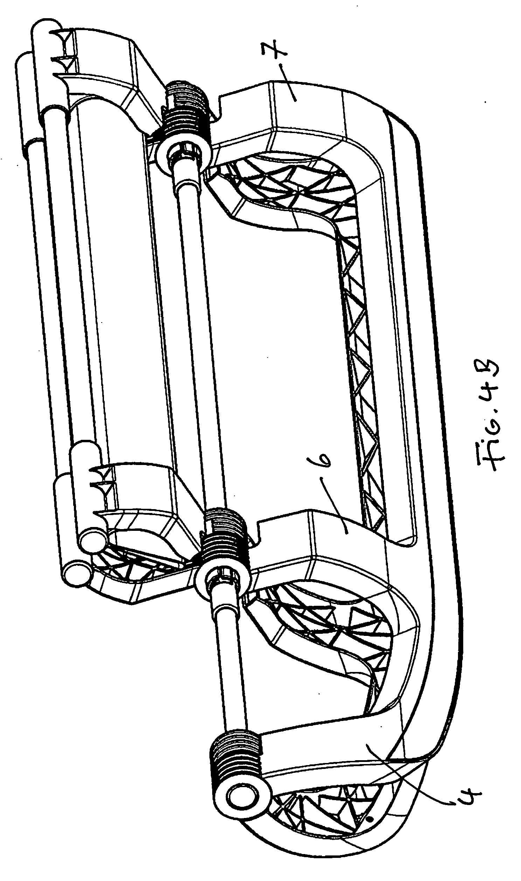

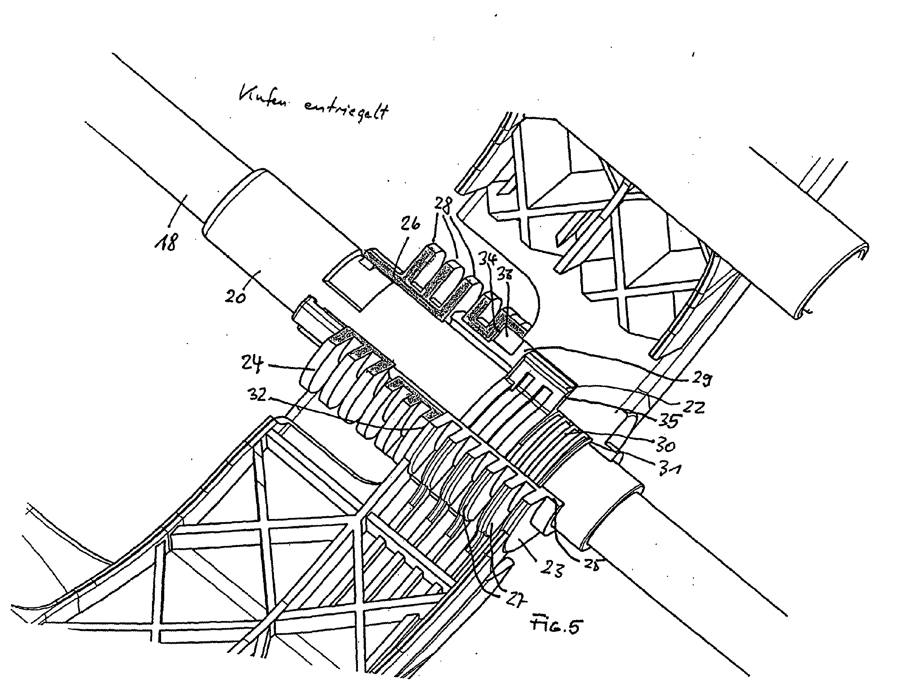

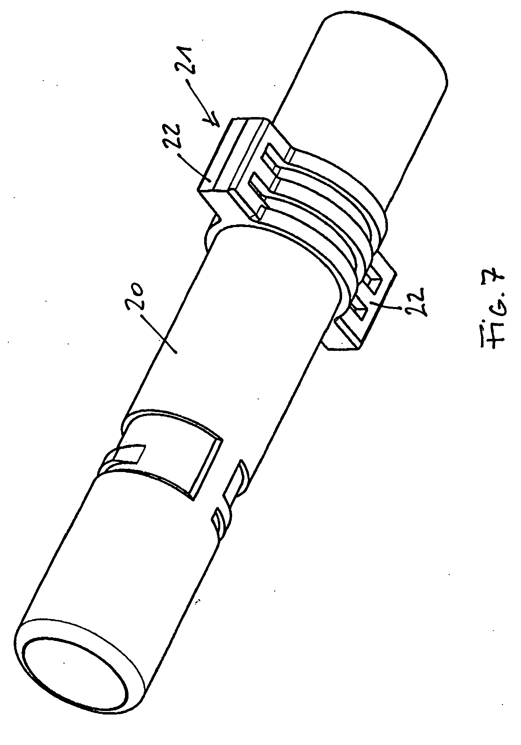

Die Figuren 5, 6 und 7 zeigen den Verriegelungsmechanismus der beiden Scharnierbereiche der scherenförmigen Querstege 6 und 7. Mit dem Verbindungsstab 18 ist jeweils eine Verriegelungshülse 20 fest verbunden, auf der ein Verriegelungselement 21 befestigt ist, das zwei diametral angeordnete, radial abstehende Verriegelungszapfen 22 aufweist. Auf der Verriegelungshülse sitzen axial aneinander anliegend die scharnierartigen Gelenkabschnitte 23 und 24 der zusammengehörigenden scherenförmigen Stege 6 oder 7 der beiden Schlittenhälften. Die scharnierartigen Abschnitte 23 und 24 enthalten jeweils einen inneren ösenförmigen bzw. rohrförmigen Abschnitt 25, 26 und daran angeformte lamellenartige Verstärkungsringe 27 und 28.

Die Verriegelungszapfen 22 der Verriegelungshülse 20 sitzen in sackartigen Aufnahmetaschen 29 des scharnierartigen Gelenkabschnitts 23, so daß sich der scharnierartige Gelenkabschnitt 23 stets nur gemeinsam mit der Verriegelungshülse 20 und dem Verbindungsstab 18 drehen kann. Die Verriegelungshülse 20 ist durch eine Schraubenfeder 30 in Richtung des anderen scharnierartigen Gelenkabschnitts 24 vorgespannt, wobei sich die Schraubenfeder 30 einerseits an den seitlichen Flanken der Verriegelungszapfen 22 und andererseits an einer Ringschulter 31 des scharnierartigen Gelenkabschnitts 23 abstützt.

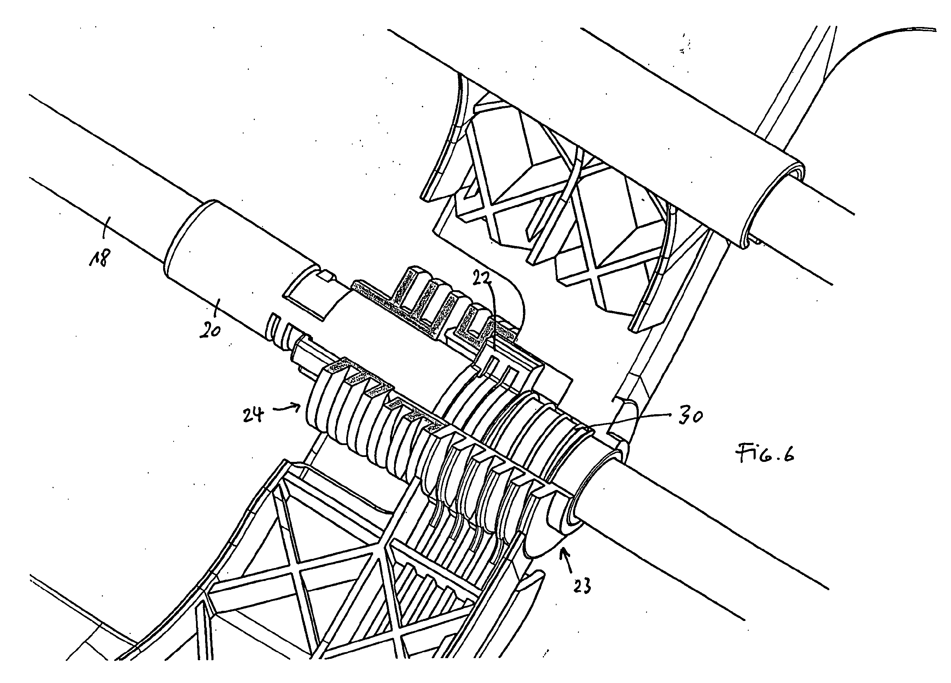

Eine umlaufende ringförmige Stirnwand 32 des scharnierartigen Gelenkabschnitts 24 verschließt solange die Austrittsöffnungen der Aufnahmeräume 29 der Verriegelungszapfen 22, bis zwei Aussparungen in der ringförmigen Stirnwand 32 mit den Austrittöffnungen der Aufnahmeräume 29 fluchten, so daß die Verriegelungszapfen 22 mit ihrem vorderen Abschnitt in entsprechende Aufnahmeräume 33 des scharnierartigen Gelenkabschnitts 24 bis zur Anlage an deren Begrenzungswände 34 eintreten können. Wenn dies geschieht, sind die beiden scharnierartigen Gelenkabschnitte 23, 24 der scherenförmigen Stege gegeneinander verriegelt, so daß der Schlitten nicht zusammengeklappt werden kann. Die Verriegelungsstellung ist in Figur 6 dargestellt.

Die Verriegelung wird dadurch wieder freigegeben, daß der Verbindungsstab 18 mit der Verriegelungshülse 20 gegen die Kraft der Feder 30 bis zur Anlage an die Begrenzungswand 35 des Aufnahmeraums 29 zurückgedrückt wird, wodurch die scharnierartigen Gelenkabschnitte wieder gegeneinander drehbar werden.

Der aufgeklappte Gebrauchszustand des Schlittens wird durch den lösbaren Verriegelungsmechanismus demnach automatisch gesichert.

## Patentansprüche

1. Schlitten,
**dadurch gekennzeichnet,**
**daß** der Schlitten aus zwei Schlittenhälften (1, 2) zusammengesetzt ist, die über Scharniereinrichtungen (9, 13, 14, 10) derart gelenkig miteinander verbunden sind, daß der Schlitten um seine Längsmittelachse zusammenklappbar ist.

2. Schlitten nach Anspruch 1,
**dadurch gekennzeichnet,**
**daß** die Schlittenhälften (1, 2) jeweils einen Kufenabschnitt (3, 3'), der in einen vorderen Quersteg (4, 4') übergeht, der an seinem freien Ende mit einem ösenförmigen Gelenkabschnitt (9) versehen ist, und an dem Kufenabschnitt angesetzte scherenförmige Stege (6, 6'; 7, 7') aufweisen, die an ihren freien Enden durch jeweils einen in Längsrichtung verlaufenden Sitzsteg (8, 8') verbunden sind, an denen ein flexibles Sitzelement (19) befestigt ist, wobei die scherenförmigen Stege jeweils an einer Zwischenposition mit ösenförmigen bzw. scharnierartigen Gelenkabschnitten (13, 14) versehen sind.

3. Schlitten nach Anspruch 1 oder 2,
**dadurch gekennzeichnet,**
**daß** alle scharnierartigen Gelenkabschnitte (9, 13, 14, 10) miteinander fluchten und daß ein querschnittlich kreisrunder Verbindungsstab (18) durch die Gelenkabschnitte verläuft.

4. Schlitten nach einem der Ansprüche 1 bis 3,
**dadurch gekennzeichnet, daß** jeweils ein oberer Abschnitt (16, 16') eines scherenförmigen Steges (6, 6'; 7, 7'),mit seiner Unterseite im aufgeklappten Zustand des Schlittens auf der Oberseite (17, 17') des zugeordneten anderen scherenförmigen Steges aufliegt.

5. Schlitten nach einem der Ansprüche 1 bis 4,
**dadurch gekennzeichnet,**
**daß** der aufgeklappte Zustand des Schlittens durch einen lösbaren Verriegelungsmechanismus gesichert ist, wobei der Verriegelungsmechanismus eine in axialer Richtung verschiebliche Verriegelungshülse (20) enthält, die die scharnierartigen Gelenkabschnitte (23,24) wenigstens eines Paares scherenförmiger Stege (6 oder 7) im aufgeklappten Zustand des Schlittens verriegelt.

6. Schlitten nach Anspruch 5,
**dadurch gekennzeichnet,**
**daß** die Verriegelungshülse (20) wenigstens einen nach außen weisenden Vorsprung (22) aufweist, der in einem Aufnahmeraum (29) eines scharnierartigen Gelenkabschnitts (23) sitzt, wobei der Aufnahmeraum (29) zu dem angrenzenden anderen scharnierartigen Gelenkabschnitt (24) hin offen ist, und daß der andere scharnierartige Gelenkabschnitt (24) eine stirnseitige Begrenzungswand (32) mit einer Aussparung aufweist, durch die ein axialer Abschnitt des Vorsprungs (22) in einen entsprechenden Aufnahmeraum (33) eintreten kann.

7. Schlitten nach Anspruch 5 oder 6,
**dadurch gekennzeichnet,**
**daß** die Verriegelungshülse (20) durch eine Federreinrichtung (30) in die Verriegelungsrichtung vorgespannt ist.

8. Schlitten nach Anspruch 5 bis 7,
**dadurch gekennzeichnet,**
**daß** die Verriegelungshülse (20) fest mit dem Verbindungsstab (18) verbunden ist.

9. Schlitten nach einem der Ansprüche 1 bis 8,
**dadurch gekennzeichnet,**
**daß** die beiden Schlittenhälften jeweils (1, 2) einstückig aus Kunststoff hergestellt sind.
